# EUROPEAN PATENT APPLICATION

(11) **EP 4 835 716 A1**
(43) Date of publication of application: **04.11.2026**
(21) Application number: 25214889.5
(22) Date of filing: 11.11.2025
(51) Int. Cl.: G06F 21/71, G06F 21/74, G06F 9/54

(54) **DATA PROCESSING METHOD, SYSTEM-ON-CHIP, ELECTRONIC DEVICE, AND IN-VEHICLE INTELLIGENT SYSTEM**

(30) Priority: 30.04.2025 CN 202510572746
(71) Applicant: Beijing Semidrive Semiconductor Technology Co., Ltd., Beijing (CN)
(72) Inventor: LU, Zhao, Beijing (CN)
(74) Representative: Ziebig Hengelhaupt Intellectual Property Attorneys Patentanwaltskanzlei PartGmbB

(57) **Abstract**

The present application provides a data processing method, a system-on-chip, an electronic device, and an in-vehicle intelligent system. The method comprises: sending, by a second hardware domain, a first data processing request to a first partition; calling a first driver in the first partition, wherein the first driver corresponds to the first data processing request and is capable of performing data interaction and collaborative operation with a first trusted application library and a second trusted application library respectively during the execution of the driver, so that both a first hardware domain and the second hardware domain have security protection capabilities; driving, by the first driver, the first partition to execute a trusted application corresponding to the first data processing request, wherein the trusted application is located in the first partition; and returning an execution result of the trusted application to the second hardware domain.

## Description

### TECHNICAL FIELD

The present application relates to the technical field of data processing, and in particular, to a data processing method, a system-on-chip, an electronic device, and an in-vehicle intelligent system.

### BACKGROUND

The existing systems and data processing methods cannot meet the data processing requirements when different hardware domains run different operating systems, and when some hardware domains have a separate trusted execution environment (TEE), while other hardware domains lack a TEE but still need to perform secure tasks.

### SUMMARY

An objective of embodiments of the present application is to provide a data processing method, a system-on-chip, an electronic device, and an in-vehicle intelligent system.

The following technical solutions are used in the embodiments of the present application. A data processing method is applied to a system-on-chip, which comprises a first hardware domain and a second hardware domain, the first hardware domain comprises a first partition and a second partition, hardware isolation exists between the first hardware domain and the second hardware domain, and an isolation exists between the first partition and the second partition; the first partition is provided with a first trusted application library for providing a secure storage service and a second trusted application library for providing a service for the second hardware domain, so as to provide a trusted execution environment; and the second partition and the second hardware domain are incapable of providing a trusted execution environment. The method comprises:
sending, by the second hardware domain, a first data processing request to the first partition;
calling a first driver in the first partition, wherein the first driver corresponds to the first data processing request and is capable of performing data interaction and collaborative operation with the first trusted application library and the second trusted application library, respectively, during the execution of the driver, so that both the first hardware domain and the second hardware domain have security protection capabilities;
driving, by the first driver, the first partition to execute a trusted application corresponding to the first data processing request, wherein the trusted application is located in the first partition; and
returning an execution result of the trusted application to the second hardware domain.

Trusted Application Library is a collection of software components designed for the Trusted Execution Environment (TEE). Its core purpose is to support the development, operation, and management of Trusted Applications (TAs). It provides foundational capabilities including predefined security interfaces, encryption algorithms, and permission management modules, enabling developers to avoid redeveloping core security functions. It also ensures that the execution of Trusted Applications within the TEE complies with security specifications through standardized calling methods, preventing external malicious access or tampering. Additionally, it offers developers a unified development framework and tools, reducing the complexity of adapting Trusted Applications to underlying TEE hardware and operating systems, thereby simplifying the development process.

In some embodiments, the first hardware domain runs a first operating system, and the second hardware domain runs a second operating system; and
in a case where the first operating system is different from the second operating system, the first driver drives the first partition to execute a trusted application corresponding to the first data processing request, which comprises:
sending, by the first driver, a first call request to a first target application in the second trusted application library;
converting, by the first target application, the first call request into a second call request, and sending the second call request to the first trusted application library;
calling, by the first trusted application library, a second driver via a GlobalPlatform trusted execution environment internal core application programming interface, in response to the second call request; and
driving, by the second driver, the first trusted application library to execute the trusted application corresponding to the first data processing request.

In some embodiments, the first trusted application library calls the second driver via the GlobalPlatform trusted execution environment internal core application programming interface, which comprises:
converting, by the first trusted application library, the first call request conforming to the GlobalPlatform trusted execution environment internal core application programming interface standard into the second call request conforming to the framework requirement of the second trusted application library.

In some embodiments, the method further comprises: sending, by the second partition, a second data processing request to the first partition;
calling a third driver in the first partition, wherein the third driver corresponds to the second data processing request;
driving, by the third driver, the first partition to execute a trusted application corresponding to the second data processing request, wherein the trusted application is located in the first partition; and
returning an execution result of the trusted application to the second partition.

In some embodiments, the first trusted application library comprises a first application library and a second application library, wherein the first application library is capable of data interaction with the second trusted application library.

In some embodiments, the second hardware domain comprises a user-space library, the user-space library comprising a plurality of library files, wherein at least one of the library files is capable of communicating with the first trusted application library and the second trusted application library in the first partition via a kernel driver of the second hardware domain.

In some embodiments, the second hardware domain sends the first data processing request to the first partition of the first hardware domain, which comprises:
calling, by the second hardware domain, a target library file of the user-space library in the second hardware domain, in response to a request to process the first data, wherein the target library file corresponds to the first data;
driving, by the target library file, a front end of a trust zone of the first hardware domain via a kernel driver;
sending, by the front end of the trust zone, the first data processing request to a back end of the trust zone;
sending, by the back end of the trust zone, the first data processing request to a request processing module;
generating, by the request processing module, a secure monitor call instruction corresponding to the first data processing request; and
calling the first driver based on the secure monitor call instruction.

In some embodiments, the secure monitor call instruction comprises an operation code and parameter information corresponding to the first data processing request, and the operation code and the parameter information are used to access the trusted application corresponding to the first data processing request.

In some embodiments, calling the first driver based on the secure monitor call instruction comprises:
accessing, by the secure monitor, target system resource based on the operation code and the parameter information, wherein the target system resource matches the call of the first driver, and the target system resource is located in the first partition.

In some embodiments, the request processing module generates a secure monitor call instruction corresponding to the first data processing request, which comprises:
parsing, by the request processing module, the first data processing request into structured data;
determining a target processing function based on the path and method corresponding to the first data processing request;
sending the structured data as input to the target processing function, and the target processing function processes the structured data;
converting the processing result of the target processing function into a response format recognizable by the secure monitor.

In some embodiments, returning the execution result of the trusted application to the second hardware domain comprises:
storing the execution result of the trusted application in a target register or a target memory location; and
calling, by the second hardware domain, the execution result stored in the target register or the target memory location.

The embodiments of the present application further provide a system-on-chip, which performs data processing using the method according to any one of the above embodiments.

The embodiments of the present application further provide an electronic device, which comprises the system-on-chip according to the above embodiments.

The embodiments of the present application further provide an in-vehicle intelligent system, which comprises the system-on-chip according to the above embodiments.

The embodiments of the present application further provide a vehicle comprising the in-vehicle intelligent system according to the above embodiments.

The beneficial effects of the embodiments of the present application are as follows:
By utilizing a unified information security architecture, information security services are provided for operating systems in a plurality of hardware domains with hardware isolation or for different domains in a unified hardware domain, ensuring that sensitive data processing and critical business operations in each operating system are under security protection, thereby achieving security collaboration across hardware domains.

### BRIEF DESCRIPTION OF THE DRAWINGS

To more clearly illustrate the technical solutions in the embodiments of the present application or related technologies, brief descriptions of the drawings used in the description of the embodiments or the related technologies will be provided below. It is apparent that the accompanying drawings in the following description are merely some embodiments of the present application, and for those skilled in the art, other drawings can be obtained according to these drawings without creative work.
FIG. 1 is a flowchart diagram of data processing according to the present application;
FIG. 2 is a structural block diagram of a first hardware domain and a second hardware domain according to the present application.

### DETAILED DESCRIPTION

Various solutions and features of the present application are described herein with reference to the accompanying drawings.

It should be understood that various modifications may be made to the embodiments of the present application. Therefore, the above specification should not be considered as limiting but merely as examples of the embodiments. Those skilled in the art shall conceive of other modifications within the scope and the spirit of the present application.

The accompanying drawings included in the specification and constituting a part of the specification illustrate the embodiments of the present application, together with the general descriptions of the present application given above and the detailed description of the embodiments given below, serve to explain the principle of the present application.

These and other features of the present application become apparent based on the following descriptions of preferred forms of the embodiments given as non-limiting examples with reference to the accompanying drawings.

It should also be understood that although the present application has been described with reference to some specific examples, many other equivalent forms of the present application can be definitely realized by those skilled in the art.

When combined with the accompanying drawings, the above and other aspects, features, and advantages of the present application become more obvious in view of the following detailed description.

Specific embodiments of the present application are described below with reference to the accompanying drawings. However, it should be understood that the disclosed embodiments are merely examples of the present application and may be implemented in various ways. Well-known and/or repetitive functions and structures are not described in detail to avoid unnecessary or redundant details from obscuring the present application. Therefore, the specific structural and functional details claimed herein are not intended to be limiting, but merely serve as a basis for the claims and as a representative basis for teaching those skilled in the art to variously use the present application in virtually any appropriately detailed structure.

Phrases "in one embodiment", "in another embodiment", "in yet another embodiment", or "in other embodiments" may be used in this specification and may refer to one or more of the same or different embodiments of the present application.

First, technical terms in the embodiments of the present application and related application environments are briefly described.

System-on-chip (SOC) refers to integrating a plurality of hardware components, such as a CPU, a memory controller, and a graphics processing unit (GPU), on a single chip to achieve a complete computing system. The SOC may integrate a single die or a plurality of identical or different dies within its package.

Multi-core heterogeneous system is composed of a plurality of single-core or multi-core processors of different types. Multi-core heterogeneity refers to a difference at a hardware level. The multi-core heterogeneous system includes at least two processor cores with different architectures. Each processor core and a hardware resource connected to the processor core constitute hardware domains that are independent of each other at the hardware level.

A domain (also referred to as a hardware domain) is a unit within an SoC chip composed of a set of independent hardware resources. These hardware resources include, but are not limited to, CPUs, GPUs, I/O controllers, etc. Each set of hardware resources can independently support the operation of an operating system, and the operating systems running on different domains are mutually independent and do not interfere with each other at the hardware level.

TEE: A trusted execution environment (TEE for short) is a hardware-based security technology aiming to provide a secure, isolated, and trusted runtime environment for sensitive data and critical applications. It ensures that the code executed and the data processed in this specific environment can operate in a space isolated from and protected against external threats. Even if the entire device is in a complex system environment with potential security threats, the data and operations within the TEE remain resistant to unauthorized access or tampering by malicious software or external attackers.

In semiconductor chips, architectures like ARM architecture (the ARM architecture refers to a reduced instruction set computer (RISC) architecture widely used in chips for numerous mobile devices, internet of things devices, and other chips) provide excellent support for the TEE. For example, ARM's TrustZone technology is a typical way to implement the TEE. This technology divides different regions within a processor core of a chip, enabling hardware-level isolation between the normal execution environment (commonly referred to as the Rich Execution Environment, or REE-the conventional environment where we use various software in daily life) and the Trusted Execution Environment (TEE). This isolation is akin to partitioning a large house with sturdy walls to create a secure small room. Normal system software, applications, and the like operate in other spaces (REE) of the big house, while code and data related to sensitive operations such as cryptographic computations and fingerprint recognition are run and stored in this secure small room (TEE). The two regions have independent access permissions to hardware resources and other privileges, thereby ensuring security.

Trusty refers to a secure operating system that provides a Trusted Execution Environment (TEE) for the Android system. A Trusty kernel is developed based on a lightweight operating system kernel (Little Kernel). The Little Kernel, as its core, provides fundamental kernel functions, such as process scheduling and memory management, for the operation of the entire system. In a Linux kernel, there are Trusty-related drivers. These drivers are mainly responsible for implementing data interaction between a non-secure operating system and a secure operating system, acting as an important bridge for communication between the two. In the user space of Android, there are some specific library files which may be referred to as user-space libraries. These library files can communicate with a trusted application running in the Trusty operating system through a kernel driver, thereby enabling collaborative work between the Android system and the Trusty system.

OP-TEE, short for Open Portable Trusted Execution Environment, is an open-source and portable trusted execution environment operating system, which is mainly used to provide security services for a Linux-based system, such as encryption, a digital signature, and key management, to protect the security of sensitive data and critical operations. Based on the TrustZone technology, the OP-TEE mainly relies on the Arm TrustZone technology to achieve hardware-level isolation. TrustZone divides the processor core into a Secure World and a Normal World, the OP-TEE runs in the Secure World, while the Linux kernel and other ordinary applications may run in the Normal World. This isolation mechanism ensures that sensitive data and operations in the OP-TEE are not easily accessed or tampered with by malicious software or attackers from the Normal World. Communication mechanism: When a Linux application needs to use the security services provided by OP-TEE, it sends a request to tee-supplicant through a TEE client API library, tee-supplicant then forwards the request to an OP-TEE driver, and the OP-TEE driver transmits the request to an OP-TEE core through an SMC (secure monitor call) instruction. The SMC (secure monitor call) instruction is a special instruction used to switch and communicate between different execution environments (such as the Normal World and the Secure World). Here, the OP-TEE driver uses the SMC instruction to notify the hardware's secure monitor to switch the request from a normal Linux execution environment to a secure execution environment where the OP-TEE is located, thereby passing the request to the OP-TEE core. The OP-TEE core is a core part of the OP-TEE and is responsible for managing and executing various trusted applications and handling security-related operations and requests. The OP-TEE core executes the corresponding trusted application and returns a result to the Linux application via a reverse path, so that the Linux application obtains the result of the requested security service. Linux applications refer to various software programs running in the Linux operating system, which have different functions and uses. The TEE client API library is a set of functions and interfaces that provide a way for the Linux application to interact with the OP-TEE. The application may initiate the request for the security service by calling these API functions. The OP-TEE driver is a software module within the operating system that interacts with the hardware and is responsible for communicating with underlying OP-TEE related hardware and transmitting the request from tee-supplicant to a hardware-related OP-TEE part for further processing. The tee-supplicant is a service program running in the Linux system and serves as an intermediate bridge between the Linux application and the OP-TEE. The tee-supplicant receives the request sent by the Linux application through the TEE client API library and prepares to forward the request further.

The above Trusty and the OP-TEE are also essentially operating systems, and they are not strictly dependent on Android or Linux to run.

Having introduced the technical terms and the related application environments involved in the present application, the design concept of the embodiments of the present application will now be briefly described.

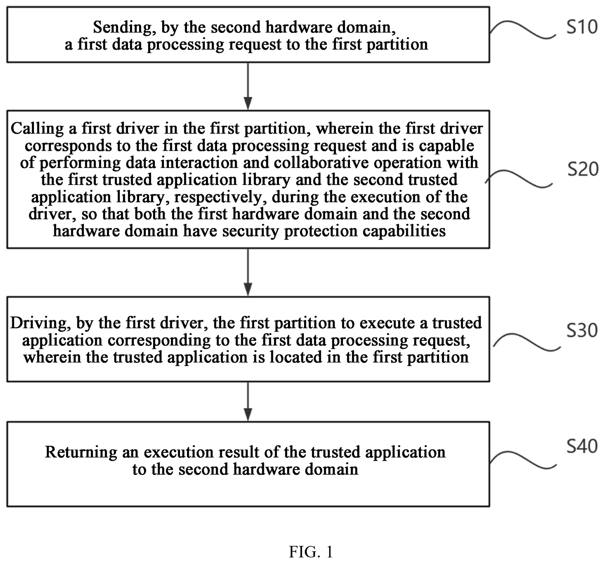

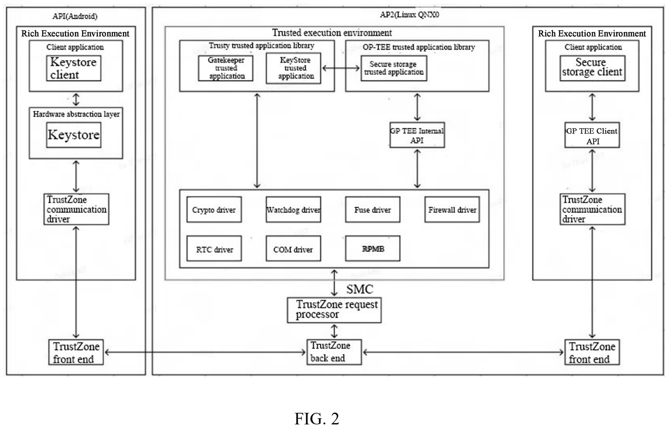

With reference to FIG. 1, an embodiment of the present application provides a data processing method. The method may be applied to a system-on-chip. The system-on-chip includes a first hardware domain and a second hardware domain. The first hardware domain includes a first partition and a second partition, and hardware isolation exists between the first hardware domain and the second hardware domain. Hard isolation is a hardware resource isolation mechanism designed for complex System-on-Chips (SoCs). It partitions the interior of the chip into multiple hardware domains such as an application domain (AP domain), a Safety domain, and a Multi-purpose domain (MP domain). Each domain can be configured to independently run an operating system and achieve inter-domain interaction through inter-core communication. At the hardware level, it involves partitioning hardware resource modules-including computing modules, memory, GPUs, and various controllers-into multiple groups, with each group constituting a hardware domain. Furthermore, all hardware resource modules are equipped with a permission control mechanism. When responding to a data access request, the hardware resource module will check the specific data field marked with a domain identifier in the access request. Only when this field matches the set domain identifier will the hardware resource module respond to the access request; if not, the access request is either ignored or an error is reported.. The first hardware domain may be represented as AP2 in FIG. 2, and may be configured to correspondingly run the Linux system or the QNX system. The second hardware domain may be represented as AP1 in FIG. 2, and may be configured to correspondingly run the Android system. In this embodiment of the present application, explanation is made to an example where the first hardware domain is AP2, which is configured to correspondingly run the Linux system, and the second hardware domain is AP1, which is configured to correspondingly run the Android system.

Isolation exists between the first partition and the second partition of the first hardware domain. The first partition is provided with a first trusted application library for providing a secure storage service and a second trusted application library for providing a service for the second hardware domain, so as to provide a trusted execution environment, while the second partition of the first hardware domain and the second hardware domain cannot provide a trusted execution environment. Overall, the first hardware domain and the second hardware domain are equivalent in hardware, while the first hardware domain is configured with permission to use information security hardware to provide the trusted execution environment. The division of the first hardware domain and the second hardware domain may be achieved through configuration. The first partition and the second partition of the first hardware domain belong to different applications in an operating system corresponding to the first hardware domain. The first partition is configured with permission to call the information security hardware, enabling secure data transmission and processing by calling a required encryption and decryption circuit module and the like corresponding to the second partition and/or the second hardware domain, while the second partition does not possess the above calling permission of the first partition. The first partition and the second partition are mutually exclusive, that is, a single CPU is configured to support an execution environment provided by one of the first partition and the second partition, but cannot simultaneously support the execution environments provided by both. The first hardware domain uses the TrustZone technology and is a trusted domain. Therefore, all operations on information security modules are performed exclusively within the first partition of the first hardware domain, ensuring their trustworthiness.

Certainly, it can be understood that the second hardware domain may also be configured with the permissions and the functionality of the above first hardware domain, while the first hardware domain is configured with permissions and the functionality of the second hardware domain in the above embodiment.

The data processing method includes the following steps.

S10, the second hardware domain sends a first data processing request to the first partition.

Exemplarily, when the second hardware domain needs to perform a security-related task, since it lacks a trusted execution environment, while the first partition of the first hardware domain has a trusted execution environment, the second hardware domain may send the first data processing request to the first partition of the first hardware domain. For example, the first data processing request may be a request to decrypt encrypted data, encrypt data, or the like. Certainly, the specific content of the first data processing request may also include other processing of sensitive data, operations on critical business, or the like, which are not specifically limited herein.

In some embodiments, the second hardware domain includes a user-space library, which comprises multiple library files. A library file refers to a collection of encapsulated reusable code. Among them, at least one library file is capable of communicating with the first trusted application library and the second trusted application library in the first partition through a kernel driver of the second hardware domain. Referring to FIG. 2, the Android system includes a second hardware domain. The user-space library of the second hardware domain may include multiple library files, and the execution of these library files can achieve specific functions. For example, one of the library files can communicate with the first trusted application library and the second trusted application library in the first partition through the kernel driver of the second hardware domain.

Exemplarily, the sending of the first data processing request by the second hardware domain to the first partition in step S10 may include:
S101, the second hardware domain calls a target library file of the user-space library in the second hardware domain, in response to a request to process the first data, where the target library file corresponds to the first data.

Exemplarily, the first hardware domain includes a trust zone, which may be further divided into a front end and a back end, as well as a specialized request processing module (the request processor in FIG. 2) , a driver, and the like. These components work collaboratively to complete secure processing of data.

The request to process the first data may come from other parts of the system, such as an upper-layer application (Such as a keystore client within a client application in the second hardware domain) . When the application needs to process specific first data, it sends this request to the second hardware domain.

The correspondence between the target library file (files in the keystore in the hardware abstraction layer) and the first data includes a correspondence of data type. For example, the target library file may be organized according to the data type. For example, if the first data is image data, the corresponding target library file may be a library specialized for image processing and contains various functions for image filtering, enhancement, compression, and other processing. If the first data is audio data, the corresponding target library file is an audio processing library, which includes functions for audio decoding, noise reduction, audio mixing, as well as a correspondence of data identifier is also included. For example, each piece of first data may have a unique identifier, and the target library file is associated with it through this identifier. For example, in a database management system, different data records have different IDs, and there is a mapping table in the target library file that associates these IDs with corresponding processing functions or modules. When a request to process data with a specific ID is received, the corresponding target library file can be located via the mapping table. Specifically, the key (target library file) in the keystore can be called through the keystore client in the client application of the second hardware domain.

After receiving the request, the second hardware domain searches for the corresponding target library file in its local collection of library files based on the characteristics of the first data (such as type or identifier) and loads the file into memory in preparation for subsequent processing.

S102, the target library file drives the front end of the trust zone of the first hardware domain via a kernel driver.

Exemplarily, the kernel driver (such as the communication driver in FIG. 2) is a part of an operating system kernel and provides an interface between hardware and software. In this scenario, the target library file needs to communicate with the front end of the trust zone of the first hardware domain by using the kernel driver. The kernel driver is responsible for converting an instruction issued by the target library file into a format that can be understood by the front end of the trust zone and transmitting it to the front end of the trust zone.

This step may involve system calls. For example, the target library file initiates the system calls to request a service from the kernel driver. The system call is a way for a user-space program to interact with the kernel space. For example, in the Linux system, the target library file may use an ioctl system call to send a specific control command to the kernel driver, informing the kernel driver of an operation to be performed by the front end of the trust zone. This step may also involve data transmission. The target library file transmits data and a parameter related to the first data processing request to the kernel driver. The kernel driver encapsulates the data and the parameter into a specific message format and then sends the data and the parameter to the front end of the trust zone via a hardware interface (such as PCIe or a USB). This step may further involve state synchronization. For example, the kernel driver is further responsible for monitoring the state of the front end of the trust zone and feeding state information back to the target library file. For example, after processing a request, the front end of the trust zone sends a completion signal to the kernel driver, and the kernel driver transmits the signal to the target library file, so that the target library file can proceed with a subsequent operation.

S103, the front end of the trust zone sends the first data processing request to the back end of the trust zone.

Exemplarily, the front end of the trust zone is mainly responsible for receiving an external request and performing initial processing and verification on the request. It checks the legitimacy of the request, such as whether the format of the request is correct, and whether the request has sufficient permissions.

After validation is passed, the front end of the trust zone forwards the first data processing request to the back end of the trust zone. This process may involve re-encapsulation and encryption of data to ensure the security of the data during transmission. For example, the request data is encrypted using a symmetric encryption algorithm and then transmitted to the back end through an internal communication channel.

S104, the back end of the trust zone sends the first data processing request to the request processing module.

Exemplarily, the back end of the trust zone is responsible for receiving a request from the front end and further processing and scheduling the request. The back end allocates the request to an appropriate request processing module according to the type and the priority of the request. The request processing module is a component or category that processes an HTTP request and is usually used in a web framework. Its main function is to receive a request from a client and generate a corresponding response, which specifically includes parsing the request data, routing the request data to a corresponding processing function, generating a response, and the like.

The back end of the trust zone may maintain a queue of requests and sort the queue according to the priorities of the requests. When an idle request processing module is available, the back end retrieves a request from the queue and sends it to this module for processing.

S105, the request processing module generates a secure monitor call instruction corresponding to the first data processing request.

Exemplarily, the request processing module is a component specialized for handling various data processing requests. The request processing module analyzes, according to the specific content of the first data processing request, an operation that needs to be performed and generates a corresponding secure monitor call instruction, such as an SMC instruction shown in FIG. 2. SMC refers to a mechanism for transferring from a Normal World to a Secure World. An application running in the Normal World may use the SMC to request code running in the Secure World to perform privileged operations, such as accessing system resources and executing system calls. This ensures that a sensitive operation is performed in a secure environment, thereby enhancing system security. The SMC may be applied in a scenario requiring a high level of security, such as the implementation of the trusted execution environment. The trusted execution environment runs in an independent first hardware domain, ensuring the secure storage, transmission, and processing of the sensitive data. Through the SMC, the application in the Normal World may communicate with the trusted execution environment to enable secure data transmission and processing.

The request processing module converts, according to a predefined rule and algorithm, the first data processing request into an instruction that can be understood by a secure monitor. For example, if the first data processing request is to encrypt a certain piece of sensitive data, the request processing module may generate a secure monitor call instruction containing information such as an encryption algorithm and a key.

When the application in the Normal World needs to perform a privileged operation, the request processing module initiates an SMC instruction. This call instruction contains information such as the to-be-executed operation code and a parameter.

Upon receiving the SMC instruction, an ARM processor falls into an exception level of the Secure World. In the Secure World, a dedicated SMC processor is responsible for processing these call instructions.

The SMC processor performs corresponding operations according to the operation code and the parameter. These operations may include accessing a system resource, performing a system call, etc.

After the operations are completed, the SMC processor returns a result to the application in the Normal World. This process can be achieved by writing the result into a specific register or a memory location.

In some embodiments, in step S105, the generation of the secure monitor call instruction corresponding to the first data processing request by the request processing module may include:
S1051: The request processing module parses the first data processing request into structured data.

Exemplarily, the first data processing request may be a string of byte streams, and the request processing module may parse the byte stream into structured data for subsequent processing.

For example, it may involve parsing the request line, parsing the request header, parsing the request body, and extracting additional information.

S1052: The target processing function is determined based on the path and method corresponding to the first data processing request.

Exemplarily, for different data processing requests, the corresponding paths and methods of the data processing requests may vary, and the way of determining the target processing function may also differ. For instance, the corresponding target processing function can be determined based on the data processing request path and method according to a preset routing table.

S1053: The structured data as input is sent to the target processing function, and the target processing function processes the structured data.

Exemplarily, after determining the target processing function, the request processing module can send the parsed structured data (such as the request line, request header, request body, and additional information) as parameters to the target processing function. The target processing function can then generate a corresponding processing result based on the structured data.

S1054: The processing result of the target processing function is converted into a response format recognizable by the secure monitor.

Exemplarily, the request processing module can receive the processing result returned by the target processing function, which may be a character string. The request processing module can set a status code based on the processing result, for example, if there is an error, it may prompt: 400. The processing result is then converted into a byte stream and assembled into a response according to the protocol format.

S106, the first driver is called based on the secure monitor call instruction.

Exemplarily, the secure monitor is a key component in a semiconductor system and is responsible for monitoring and managing the system's security operations. The secure monitor verifies and authorizes the secure monitor call instruction to ensure the legitimacy and security of the instruction.

Upon successful verification, the secure monitor calls the first driver according to the content of the instruction. The first driver interacts with a hardware device to perform a specific operation, such as encrypting, decrypting, and storing the first data.

The secure monitor call instruction includes operation code and parameter information corresponding to the first data processing request, and the operation code and the parameter information are used to access the trusted application corresponding to the first data processing request.

The operation code and the parameter information contained in the secure monitor call instruction serve as a key bridge for connecting the first data processing request with the trusted application. The operation code specifies the specific type of an operation to be performed, while the parameter information provides detailed data required for performing the operation. The operation code and the parameter information jointly enable the trusted application to accurately process the first data.

The operation code usually uses a fixed-length binary encoding manner. For example, in a simple system, the operation code may be represented by an 8-bit binary number. Different binary combinations correspond to different operation types, as shown in the following table:

| Operation code (binary) | Operation type |
|---|---|
| 00000001 | Data encryption |
| 00000010 | Data decryption |
| 00000011 | Data storage |
| 00000100 | Data reading |

| Field name | Length (bit) | Meaning |
|---|---|---|
| Data start address | 32 | Start address of the first data in a memory |
| Data Length | 16 | Length of the first data (in bytes) |
| Encryption algorithm identifier | 8 | The identifier of the encryption algorithm used, e.g., 01 for AES, and 02 for DES |
| Key number | 16 | The number of the key used for encryption, which can be used to retrieve a specific key from a keystore |

This fixed-length encoding manner facilitates quick identification of the operation type by the secure monitor, thereby improving processing efficiency. An encoding rule for the operation code is usually predefined by a system developer.

The format of the parameter information varies depending on the operation code. Generally, the parameter information consists of a plurality of fields, each representing a different meaning. For example, in a data encryption operation, the parameter information may include the following fields:

In some embodiments, calling the first driver based on the secure monitor call instruction in step S 106 may include:
The secure monitor accesses target system resources based on the operation code and parameter information, wherein the target system resources match the call of the first driver and are located in the first partition. For example, the call of the first driver requires target system resources. The secure monitor can determine the type of operation to be performed based on the operation code, and can also determine the detailed data required for the operation to be performed based on the parameter information. Based on the type of the determined operation to be performed and the required detailed data, the target system resources that the secure monitor needs to access can be determined, and access to the target system resources enables the call of the first driver.

Each operation code corresponds to a specific function or method in the trusted application. Upon receiving the operation code, the secure monitor finds a corresponding function or method in the trusted application according to the predefined mapping table. For example, when the operation code is 00000001 (data encryption), the secure monitor calls a function named encrypt_data in the trusted application. The parameter information serves as an input for calling the function or method in the trusted application. When calling the function or method, the secure monitor passes the parameter information according to a parameter list of the function or method. For example, when the encrypt _data function is called, the data start address, the data length, the encryption algorithm identifier, and the key number are passed as parameters to the function, enabling it to properly perform the encryption operation on the first data.

S20, the first driver in the first partition is called, wherein the first driver corresponds to the first data processing request and is capable of performing data interaction and collaborative operation with the first trusted application library and the second trusted application library respectively during the execution of the driver, so that both the first hardware domain and the second hardware domain have security protection capabilities.

Exemplarily, for the first partition to perform a corresponding processing operation on the first data processing request, it needs to call the first driver corresponding to the first data processing request. Here, the first driver corresponding to the first data processing request means that the execution of the first driver enables the processing of the first data processing request. For example, when the second hardware domain needs to encrypt data, the first driver may be, but is not limited to, a Crypto driver. The Crypto driver refers to a software driver configured to control and manage encryption-related hardware or functions. The Crypto driver can implement the encryption function. For example, the Crypto driver can call a hardware encryption module or execute a software encryption algorithm to perform data encryption and decryption operations, ensuring the confidentiality of the data. For example, when the sensitive data is stored, the Crypto driver uses algorithms, such as the Advanced Encryption Standard (AES), to encrypt the data, so that the data is stored in ciphertext form, and the original data can be retrieved only through a corresponding decryption operation.

Alternatively, if the first data processing request involves launching software with high security level requirements, the Crypto driver may perform identity authentication and authorization. In other words, the Crypto driver supports an authentication mechanism, such as a digital signature or a hash operation, to verify the identity and integrity of a device, a user, or data, preventing illegal access and data tampering. By using the Crypto driver to verify the digital signature of the software being launched, it ensures that the software is untampered, thereby achieving secure boot.

Certainly, it may be understood that the first data processing request may also be another type of data processing request, and the first driver may also be another driver (such as various drivers shown in FIG. 2: a Crypto driver, a "watch dog driver" (a driver configured to control and manage a watchdog timer), a "Fuse driver" (a driver configured to control and operate eFuse), a "Firewall driver" (a driver configured to control and manage a firewall function), an "RTC driver " (a driver configured to control and manage RTC), a "COM driver" (a driver configured to implement data transmission and interaction between a semiconductor device and an external device or a system), and an "RPMB" (replay protected memory block). These are merely examples and do not constitute any limitation on the protection scope of the claims.

Taking automotive electronics as an example, with the development of automobile intelligence and network connectivity, a large volume of sensitive data in automobiles needs protection, such as vehicle control instructions and user personal information. For example, in an autonomous driving scenario, a control room of the vehicle may use the aforementioned system-on-chip. If the second hardware domain intends to achieve communication with the outside world and this communication data needs to be encrypted, the second hardware domain may send a request to encrypt the communication data to the first partition of the first hardware domain, which has the trusted execution environment. In this case, the Crypto driver may be called to encrypt the data communicated between the vehicle and the outside, thereby preventing potential hacker attacks that could cause the vehicle to lose control. In addition, its identity authentication function ensures that only an authorized device can communicate with an electronic control unit (ECU) of the vehicle.

Certainly, there may be other specific application scenarios as well, and these are merely examples and are not intended to limit the protection scope of the claims.

The first driver, during its execution, can perform data interaction and collaborative operation with the first trusted application library (Trusted application library in Fig. 2) and the second trusted application library set in the first partition of the first hardware domain, respectively, so that both the first hardware domain and the second hardware domain have the security protection capabilities. For example, the first trusted application library may be a key application library, and the second trusted application library may be a secure storage application library. The first partition includes a Trusty application library and an OP-TEE application library. The trusted execution environment of the first partition may provide services for Linux system-side applications and Android system-side applications through a second trusted application library of the OP-TEE. On devices that need to leverage Android's rich application ecosystem (Rich Execution Environment) while relying on specific Linux system services (such as application scenarios requiring data storage and encrypted transmission in a Linux environment), such as hybrid smart devices and in-vehicle intelligent systems, information security requirements of applications in both ecosystems can be effectively satisfied, which provides corresponding security services such as secure storage and encryption operations, for the applications on the Android system side and on the Linux system side.

In some embodiments, the first trusted application library may comprise a first application library and a second application library, wherein the first application library is capable of data interaction with a second trusted application library. With reference to FIG. 2, the first application library may comprise a Gatekeeper trusted application, and the second trusted application library may comprise a KeyStore trusted application. In response to a corresponding data processing request, the KeyStore trusted application is capable of data interaction with the second trusted application library.

Conversion calls between the first trusted application library and the second trusted application library may be made. For example, certain functions unique to the first trusted application library are directly interfaced with a driver level of the Trusty TEE through a native driver interface of the Trusty TEE. For the second trusted application library, it is also possible to convert a function call request conforming to the GlobalPlatform Internal API (GP TEE Internal API) standard into a driver call request conforming to a Trusty TEE framework through a translation interface. This ensures that a third-party secure storage application conforming to the GlobalPlatform (GP) standard can run directly in this trusted execution environment without any modification.

S30, the first driver drives the first partition to execute a trusted application corresponding to the first data processing request, wherein the trusted application is located in the first partition.

Exemplarily, when the first driver is called, the first driver drives the first partition to execute one or more trusted applications in the first partition to implement the first data processing request. For example, when the first data processing request is to encrypt data, the first driver may be, but is not limited to; a software driver (the Crypto driver) configured to control and manage the encryption-related hardware or function. The Crypto driver can implement data encryption. For example, it can call a hardware encryption module or execute a software encryption algorithm to encrypt and decrypt data, thereby ensuring the confidentiality of the data. For example, when the sensitive data is stored, the Crypto driver uses an algorithm such as an advanced encryption standard (AES) to encrypt the data, so that the data is stored in a ciphertext form, and the original data can be obtained only through a corresponding decryption operation.

In some embodiments, the first hardware domain runs a first operating system, and the second hardware domain runs a second operating system.

In a case where the first operating system is different from the second operating system, the process in S30 where the first driver drives the first partition to execute the trusted application corresponding to the first data processing request includes the following steps S31 to S34.

S31, the first driver sends a first call request to a first target application in the second trusted application library.

For example, if the first driver needs to call a certain trusted application in the first trusted application library but cannot directly call the trusted application in the first trusted application library, the first driver can call the trusted application in the first trusted application library through data conversion and the calling relationship between the second trusted application library and the first trusted application library.

For example, the first driver may first call a certain trusted application in the second trusted application library (taking an OP-TEE trusted application library in FIG. 2 as an example). For example, if the trusted application is a secure storage trusted application, the first target application is the secure storage trusted application. Certainly, it may be understood that the first target application may also be another trusted application (not shown in the figure) in the second trusted application library. This is merely an example and does not constitute any limitation on the protection scope of the claims. The call to the trusted application in the first trusted application library corresponding to the first data processing request requires the execution of the first target application. Therefore, the first driver may send the first call request to the first target application in the second trusted application library, so that the first target application can be executed.

S32, the first target application converts the first call request into a second call request and sends the second call request to the first trusted application library.

Exemplarily, the first target application may first convert the first call request into the second call request that can call a second driver, and then send the converted second call request to the first trusted application library.

S33, the first trusted application library calls the second driver via a GlobalPlatform trusted execution environment internal core application programming interface, in response to the second call request.

Exemplarily, upon receiving the aforementioned second call request, the first trusted application library may call the second driver in response to the second call request. For example, the first trusted application library may call the second driver through the GlobalPlatform trusted execution environment (TEE) internal core application programming interface. Certainly, it may be understood that the first trusted application library may also call the second driver through other means, as long as the requirement for calling the second driver can be satisfied.

S34, the second driver drives the first trusted application library to execute the trusted application corresponding to the first data processing request.

Exemplarily, upon receiving the second call request, the second driver may drive the first trusted application library to execute the trusted application in the first trusted application library that corresponds to the first data processing request. For example, if the first data processing request is to retrieve a key from a key application library in the first trusted application library, the second driver is a driver that drives the key application library to execute.

Certainly, the above steps S31 to S34 are described by taking the scenario as an example, where the first data processing request calls the trusted application in the first trusted application library through the conversion and calling relationship between the second trusted application library and the first trusted application library. In specific applications, if the first data processing request requires the execution of a trusted application in the second trusted application library, but the first data processing request cannot directly call the trusted application in the second trusted application library through the driver, a third call request may be first sent to the first trusted application library, the first trusted application library may convert the third call request into a fourth call request by using a call conversion way similar to that in steps S31 to S34, and then the trusted application in the second trusted application library may be called through the fourth call request.

In some embodiments, the first trusted application library calls the second driver through the GlobalPlatform trusted execution environment internal core application programming interface, including:
The first trusted application library converts the first call request conforming to the GlobalPlatform trusted execution environment internal core application programming interface standard into the second call request conforming to the framework requirements of the second trusted application library. The internal core Application Programming Interface (API for short) is a set of predefined functions used for different software to interact with each other. The specific calling process may proceed as follows: when initiating a call, the first trusted application library generates the first call request conforming to the GlobalPlatform trusted execution environment internal core application programming interface standard. This request acts like a detailed "task list" which contains information about an operation to be performed, such as whether to read data, write data, or perform a specific calculation, and further contains data involved in the operation, a target address for the operation, and other information. Since the framework of the second trusted application library has its unique requirements, the first call request cannot be used directly by the framework of the second trusted application library, so it needs to be converted. For example, data format conversion may be involved. Different application library frameworks may require different data formats. For example, the data in the first call request may be represented as a hexadecimal character string, while the framework of the second trusted application library requires a binary array. In this case, the hexadecimal character string needs to be converted into the binary array. Assuming that the data in the first call request is a hexadecimal character string like "0A1B", every two characters are grouped during conversion and converted into a corresponding 8-bit binary number, ultimately producing a binary array. Parameter sequence adjustment may also be involved. The two frameworks may have different regulations on the arrangement sequence of parameters. For example, in the first call request, the parameter sequence is [operation type, data, target address], while the parameter sequence of the framework requirement of the second trusted application library is [target address, operation type, data]. Therefore, the parameter sequence needs to be adjusted according to the requirements of the second trusted application library framework. In addition, keyword replacement may be involved. Different frameworks may use different keywords to represent the same or similar operations. For example, the first call request uses "READ" to represent a read operation, while the framework of the second trusted application library uses "FETCH" to represent the same operation. In this case, "READ" needs to be replaced with "FETCH" during conversion.

The conversion between the first call request and the second call request may involve data encoding conversion algorithms, such as the aforementioned conversion from a hexadecimal string to a binary array. In Python, this can be implemented with the following code:
python
hex_string = "0A1B"
binary_array = bytes.fromhex (hex_string)
print (binary_array)

Keyword replacement may involve a regular expression matching and replacement algorithm. When keyword replacement is needed, a regular expression may be used. For example, "READ" is replaced with "FETCH" by using a re module in Python.
python
import re
original _request = "READ data from address"
new_request = re.sub (r'READ', 'FETCH', original_request)
print (new_request)

The above processes may use a scripting language such as Python or JavaScript, which can conveniently implement various conversion logics. Data format conversion, parameter sequence adjustment, and keyword replacement may be implemented by writing a script.

After the above conversion process, the second call request that meets the framework requirement of the second trusted application library is obtained. This request can be correctly recognized and processed by the framework of the second trusted application library, thereby completing the corresponding operation.

The first trusted application library performs a series of conversion on the first call request conforming to the GlobalPlatform trusted execution environment internal core application programming interface standard to generate the second call request conforming to the framework requirement of the second trusted application library. This enables the call to the second driver.

S40, an execution result of the trusted application is returned to the second hardware domain.

Exemplarily, after the trusted application runs, it obtains the execution result of the trusted application, and the execution result is returned to the second hardware domain, allowing the second hardware domain to achieve its desired functions through the execution of the trusted application in the trusted execution environment of the first partition in the first hardware domain.

In some examples, the process in S40, where the execution result of the trusted application is returned to the second hardware domain, includes the following steps.

S401, the execution result of the trusted application is stored in a target register or a target memory location.

For example, when the trusted application completes data processing and generates the execution result, it is suitable to use the target register storage method if the data volume of the result is relatively small. The system pre-allocates specific registers for storing the execution result. These registers have high-speed read and write features, enabling quick response to data storage and read operations. For example, the system designates a register R5 to store a processing status flag (for example, 0 indicates successful processing and 1 indicates failed processing). The trusted application writes the processing status flag into this register according to a specific instruction. During the writing process, the register may be first cleared to ensure that the latest execution result is stored.

If the data volume of the execution result is relatively large, such as a large volume of encrypted user privacy data, the target memory location storage method can be adopted. A secure memory region in the first hardware domain may be specially allocated as the target memory location for storing the execution result. During storage, the trusted application first sends a request to a memory management unit to obtain access permissions for this memory region. Then, the execution results are written into this region in sequence according to a sequence of memory addresses. To improve storage efficiency, a paging storage mode may be used, where the execution results are divided into a plurality of fixed-size pages and stored in different pages of the memory in sequence.

For target register storage, a simple binary encoding format is usually used due to the limited storage space of registers. For example, a 1-bit binary number is used to represent a processing status (0 or 1), and an 8-bit binary number is used to represent a simple error code, etc. This approach allows for the efficient storage of critical information within the limited register space.

For target memory location storage, where the data volume is larger, a more complex storage format may be used. For example, a structure format is used to divide the execution result according to different fields. For example, for an encrypted data processing result, the structure may contain the following fields: a data length field used to indicate the number of bytes of encrypted data; an encryption algorithm identifier field used to specify the type of an encryption algorithm used; an encrypted data field storing actual encrypted data; and a hash value field storing a hash value obtained by performing a hash calculation on the encrypted data and used for subsequent verification of data integrity. Each field is stored sequentially in the target memory location in a fixed sequence, so that the second hardware domain can accurately parse it.

S402, the second hardware domain calls the execution result stored in the target register or the target memory location.

For example, the second hardware domain calls the execution result in the target register. Specifically, after initiating the data processing request, the second hardware domain may periodically send query signals to the first hardware domain via a hardware interface, inquiring whether the execution result is ready. When detecting that the execution result has been stored in the target register, the first hardware domain sends a result-ready signal to the second hardware domain through the hardware interface.

After receiving the result-ready signal, the second hardware domain reads the execution result from the target register through a specific read instruction. For example, it uses a dedicated register-read instruction to read the processing status flag in the register R5. After the reading is completed, the second hardware domain may parse and process the read result, determine, according to the processing status flag, whether the data processing is successful, and then proceed with corresponding subsequent operations, such as notifying a user or initiating a next step in the data processing workflow.

Similarly, after sending the data processing request, the second hardware domain may continuously query whether the result is ready. When receiving the result-ready signal sent by the first hardware domain and learning that the execution result is stored in the target memory location, the second hardware domain may send a memory read request to the first hardware domain through the hardware interface. The request contains a start address of the target memory location to be read and information about the data length.

After receiving the request, the first hardware domain reads the corresponding data from the target memory location according to the start address and data length in the request. During the reading process, data integrity is checked to ensure that the read data is consistent with the stored data. Then, the read data is transmitted to the second hardware domain through the hardware interface.

After receiving the data, the second hardware domain first parses the data according to the storage format. For example, the data length field, the encryption algorithm identifier field, the encrypted data field, and the hash value field are extracted. Then, a hash calculation is performed on the encrypted data, and a calculated hash value is compared with a received hash value to verify data integrity. If the verification passes, the data is considered untampered during transmission, and the execution result can be used. If the verification fails, an error feedback is sent to the first hardware domain to request the retransmission of the data.

In some embodiments, the second partition in the first hardware domain, which does not have the trusted execution environment, can also process security-related data through the first partition that has the trusted execution environment. The method further includes:
The second partition sends a second data processing request to the first partition.

Exemplarily, the second partition may include a secure storage client related to secure storage. This client has a need for secure storage of data. However, the second partition does not have a trusted execution environment and needs to collaborate with the first partition to ensure the security of the data. For example, when the secure storage client receives an instruction that the data needs to be securely stored, it can call the communication driver via the corresponding interface (GP TEE Client API), thereby enabling the second partition to send the second data processing request to the first partition to request the secure storage of the data.

For example, the secure storage client in the second partition is responsible for receiving user-sensitive data, such as users' ID card numbers, bank card information, etc. Since such data is highly sensitive, it needs to be securely stored. However, the second partition itself does not have a trusted execution environment and cannot ensure the security of the data during storage.

When the secure storage client receives the instruction to securely store this data, the second partition sends the second data processing request to the first partition according to a predefined communication protocol. The second data processing request may contain the following information:
Data content: the user-sensitive data that needs to be securely stored;
Request type: explicitly indicating that this is a secure storage request;
Target storage location: specifying a specific location where the data needs to be stored, such as a specific secure storage region in the first partition.

To ensure the security of the request during transmission, the second partition may encrypt the second data processing request, for example, by using a symmetric encryption algorithm or by using a pre-negotiated key. In addition, to guarantee the integrity of the request, additional operations such as adding a digital signature can be taken-for instance, using the private key of the second partition to sign the hash value of the request.

The third driver in the first partition is called based on the second data processing request.

After receiving an encryption request sent by the second partition, the first partition first decrypts the request by using the pre-negotiated key. Then, the validity of the digital signature is verified to ensure that the request has not been tampered with during transmission.

Once the verification is successful, the first partition searches for the corresponding third driver in its driver set according to the request type. In this embodiment, since it is a secure storage request, the third driver specialized for processing the secure storage request will be found. The third driver contains the underlying logic for interacting with storage devices and interfaces for communicating with trusted applications.

The third driver drives the first partition to execute the trusted application corresponding to the second data processing request, wherein the trusted application is located in the first partition.

After receiving the second data processing request, the third driver further parses the request into instructions and parameters that can be understood by the trusted application. Specifically, information such as data content and target storage location is transmitted to the trusted application.

The trusted application specifically runs in the trusted execution environment in the first partition, ensuring a high level of security. For the secure storage request, the trusted application may perform the following operations:
Data encryption: The data is re-encrypted again by using a more advanced encryption algorithm, such as an RSA asymmetric encryption algorithm. This further enhances the security of the data. Even if the data is illegally obtained during storage, it cannot be restored without the corresponding decryption key.

Storage operation: The encrypted data is stored at the specified target storage location. During the storage process, strict access control is implemented, and only authorized programs and users can access this storage location.

The execution result of the trusted application is returned to the second partition.

After completing the data storage operation, the trusted application generates the execution result. The execution result may include status information indicating successful or failed storage. If the storage is successful, a unique identifier of the stored data may also be contained.

The first partition encrypts the execution result and adds a digital signature according to the same communication protocol as that of the second partition, and then sends the execution result to the second partition. After receiving the execution result, the second partition decrypts and verifies the signature. If the execution result indicates successful storage, the second partition can notify an enterprise business system that the data has been securely stored. If the storage fails, the second partition takes corresponding measures according to the cause of the failure, such as re-sending the request or notifying an administrator for troubleshooting.

The embodiments of the present application further provide a system-on-chip, which performs data processing using the method according to any one of the aforementioned embodiments.

The embodiments of the present application further provide an electronic device, which includes the system-on-chip as described in the aforementioned embodiments.

The embodiments of the present application further provide an in-vehicle intelligent system, which includes the system-on-chip as described in the aforementioned embodiments.

The embodiments of the present application further provide a vehicle. The vehicle comprises the in-vehicle intelligent system as described in the aforementioned embodiments. The vehicle may be a vehicle with autonomous driving function or any other type of vehicle, and the specific type of vehicle is not limited herein.

The electronic device may further include a processor and a memory. The memory stores an executable program. The memory executes the executable program to perform the steps of the aforementioned method. The embodiments of the present application further provide a storage medium carrying one or more computer programs, and when the one or more computer programs are executed by a processor, the steps of the method described above are implemented. It should be understood that in the embodiments of the present application, the processor may be a Central Processing Unit (CPU for short), or the processor may also be other general-purpose processors, a Digital Signal Processor (DSP for short), an Application-Specific Integrated Circuit (ASIC for short), a Field-Programmable Gate Array (FPGA for short), or other programmable logic devices, a discrete gate or transistor logic device, a discrete hardware component, or the like. It may be further understood that the memory mentioned in the embodiments of the present application may be a volatile memory or a nonvolatile memory, or may include both a volatile memory and a nonvolatile memory. The nonvolatile memory may be a Read Only Memory (ROM for short), a programmable ROM (PROM for short), an Erasable PROM (EPROM for short), an Electrically EPROM (EEPROM for short), or a flash memory. The volatile memory may be a Random Access Memory (RAM for short), which is used as an external cache. By way of illustrative but not restrictive explanation, many forms of RAM are available, such as a Static RAM (SRAM for short), a Dynamic RAM (DRAM for short), a Synchronous DRAM (SDRAM for short), a Double Data Rate SDRAM (DDR SDRAM for short), an Enhanced SDRAM (ESDRAM for short), a Synchlink DRAM (SLDRAM for short), and a Direct Rambus RAM (DR RAM for short). It should be noted that when the processor is a general-purpose processor, a DSP, an ASIC, a FPGA or other programmable logic device, a discrete gate or a transistor logic device, or a discrete hardware component, the memory (storage module) is integrated into the processor. It should be noted that the memory described herein is intended to include, but is not limited to, these memories and any other suitable types of memory. It should be further understood that "first", "second", "third", "fourth", and various numerical designations mentioned herein are merely distinguished for convenience of description, and are not used for limiting the scope of the present application. It should be understood that the term "and/or" used herein only describes an association relationship between associated objects and indicates that three relationships may exist. For example, A and/or B may indicate the following three cases: A exists alone, both A and B exist, and B exists alone. In addition, the character "/" used herein generally indicates an "or" relationship between the associated objects. During implementation, the steps of the aforementioned methods may be completed by integrated logic circuits in the hardware of the processor or instructions in the form of software. The steps of the methods disclosed with reference to the embodiments of the present application may be directly executed and completed by a hardware processor, or by a combination of hardware and software modules in the processor. The software module may be located in mature storage media within the field, such as random access memory, flash memory, read-only memory, programmable read-only memory, electrically erasable programmable memory, registers, and the like. The storage medium is located in the memory, and the processor reads information in the memory and completes the steps of the aforementioned methods in combination with its hardware. To avoid repetition, details are not described herein. In various embodiments of the present application, the sequence numbers of the processes do not imply the sequence of execution. The execution sequence of the processes should be determined by their functions and internal logic, and should not be constructed as any limitation on the implementation processes of embodiments of the present application. A person of ordinary skill in the art may be aware that illustrative logical blocks (ILBs for short) and steps described in conjunction with the embodiments disclosed herein may be implemented by electronic hardware or a combination of computer software and electronic hardware. Whether these functions are executed by hardware or software depends on particular applications and design constraints of the technical solutions. A person skilled in the art may use different methods to implement the described functions for each specific application, but such implementation should not be considered beyond the scope of the present application. In the several embodiments provided in the present application, it should be understood that the disclosed methods and chip may be implemented in other ways. For example, the device embodiments described above are merely illustrative. For example, the division of the units is only one way of logical functional division, and in actual implementation, there may be other division ways. For example, a plurality of units or components may be combined or integrated into another system, or some features may be omitted or not executed. In addition, the couplings or direct couplings or communication connections shown or discussed between each other may be indirect couplings or communication connections through some interfaces, devices, or units, or may be electrical, mechanical, or other forms. The units described as separate components may or may not be physically separated, and the components shown as units may or may not be physical units. In other words, they may be located at one position or distributed on a plurality of network units. Part or all of the units may be selected according to actual requirements to achieve the objectives of the solutions of the embodiments. In addition, functional units in the various embodiments of the present application may be integrated into one processing unit, or they can exist separately as individual physical units, or two or more units may be integrated into one unit. In the aforementioned embodiments, the implementation can be entirely or partially achieved through software, hardware, firmware, or any combination thereof. When implemented using software, it can be entirely or partially implemented in the form of a computer program product. The computer program product includes one or more computer instructions. When the computer program instructions are loaded and executed on a computer, all or part of the processes or functions described in the embodiments of the present application are generated. The computer may be a general-purpose computer, a dedicated computer, a computer network, or another programmable device. The computer instructions may be stored in a computer-readable storage medium or transmitted from a computer-readable storage medium to another computer-readable storage medium. For example, the computer instructions may be transmitted from a website, computer, server, or data center to another website, computer, server, or data center via wired means (e.g., a coaxial cable, an optical fiber, or a digital subscriber line) or wireless means (e.g., infrared, radio, or microwave). The computer-readable storage medium may be any available medium accessible by a computer, or a server, a data center, or other data storage devices containing one or more integrated available media. The available media may be magnetic media (e.g., floppy disks, hard disks, or magnetic tapes), optical media (e.g., DVDs), semiconductor media (e.g., solid-state drives), or the like. The aforementioned descriptions are merely specific implementations of the present application, but the protection scope of the present application is not limited thereto. Any variation or replacement that can be readily conceived by a person skilled in the art within the technical scope disclosed in the present application shall fall within the protection scope of the present application. Therefore, the protection scope of the present application shall be defined by the protection scope of the claims.

## Claims

1. A data processing method, **characterized in that**, the data processing method is applied to a system-on-chip, which comprises a first hardware domain and a second hardware domain, the first hardware domain comprises a first partition and a second partition, hardware isolation exists between the first hardware domain and the second hardware domain, and an isolation exists between the first partition and the second partition; the first partition is provided with a first trusted application library for providing a secure storage service and a second trusted application library for providing a service for the second hardware domain, so as to provide a trusted execution environment; and the second partition and the second hardware domain are incapable of providing a trusted execution environment; and
the method comprises:
sending, by the second hardware domain, a first data processing request to the first partition;
calling a first driver in the first partition, wherein the first driver corresponds to the first data processing request and is capable of performing data interaction and collaborative operation with the first trusted application library and the second trusted application library, respectively, during the execution of the driver, so that both the first hardware domain and the second hardware domain have security protection capabilities;
driving, by the first driver, the first partition to execute a trusted application corresponding to the first data processing request, wherein the trusted application is located in the first partition; and
returning an execution result of the trusted application to the second hardware domain.

2. The method according to claim 1, **characterized in that**, the first hardware domain runs a first operating system, and the second hardware domain runs a second operating system; and
in a case where the first operating system is different from the second operating system, the first driver drives the first partition to execute a trusted application corresponding to the first data processing request, which comprises:
sending, by the first driver, a first call request to a first target application in the second trusted application library;
converting, by the first target application, the first call request into a second call request, and sending the second call request to the first trusted application library;
calling, by the first trusted application library, a second driver via a GlobalPlatform trusted execution environment internal core application programming interface, in response to the second call request; and
driving, by the second driver, the first trusted application library to execute the trusted application corresponding to the first data processing request.

3. The method according to claim 2, **characterized in that**, calling, by the first trusted application library, the second driver via the GlobalPlatform trusted execution environment internal core application programming interface comprises:
converting, by the first trusted application library, the first call request conforming to the GlobalPlatform trusted execution environment internal core application programming interface standard into the second call request conforming to the framework requirement of the second trusted application library.

4. The method according to claim 2, **characterized in that**, it further comprises:
sending, by the second partition, a second data processing request to the first partition;
calling a third driver in the first partition, wherein the third driver corresponds to the second data processing request;
driving, by the third driver, the first partition to execute a trusted application corresponding to the second data processing request, wherein the trusted application is located in the first partition; and
returning an execution result of the trusted application to the second partition.

5. The method according to claim 2, **characterized in that**, the first trusted application library comprises a first application library and a second application library, wherein the first application library is capable of data interaction with the second trusted application library.

6. The method according to claim 1, **characterized in that**, the second hardware domain comprises a user-space library, the user-space library comprising a plurality of library files, wherein at least one of the library files is capable of communicating with the first trusted application library and the second trusted application library in the first partition via a kernel driver of the second hardware domain.

7. The method according to claim 6, **characterized in that**, sending, by the second hardware domain, the first data processing request to the first partition comprises:
calling, by the second hardware domain, a target library file of the user-space library in the second hardware domain, in response to a request to process the first data, wherein the target library file corresponds to the first data;
driving, by the target library file, a front end of a trust zone of the first hardware domain via a kernel driver;
sending, by the front end of the trust zone, the first data processing request to a back end of the trust zone;
sending, by the back end of the trust zone, the first data processing request to a request processing module;
generating, by the request processing module, a secure monitor call instruction corresponding to the first data processing request; and
calling the first driver based on the secure monitor call instruction.

8. The method according to claim 7, **characterized in that**, the secure monitor call instruction comprises an operation code and parameter information corresponding to the first data processing request, and the operation code and the parameter information are used to access the trusted application corresponding to the first data processing request.

9. The method according to claim 7, **characterized in that**, calling the first driver based on the secure monitor call instruction comprises:
accessing, by the secure monitor, target system resource based on the operation code and the parameter information, wherein the target system resource matches the call of the first driver, and the target system resource is located in the first partition.

10. The method according to claim 7, **characterized in that**, generating, by the request processing module, a secure monitor call instruction corresponding to the first data processing request comprises:
parsing, by the request processing module, the first data processing request into structured data;
determining a target processing function based on the path and method corresponding to the first data processing request;
sending the structured data as input to the target processing function, and the target processing function processes the structured data;
converting the processing result of the target processing function into a response format recognizable by the secure monitor.

11. The method according to claim 1, **characterized in that**, returning the execution result of the trusted application to the second hardware domain comprises:
storing the execution result of the trusted application in a target register or a target memory location; and
calling, by the second hardware domain, the execution result stored in the target register or the target memory location.

12. A system-on-chip, **characterized in that**, it performs data processing using the method according to any one of claims 1 to 11.

13. An electronic device, **characterized in that**, it comprises the system-on-chip according to claim 12.

14. An in-vehicle intelligent system, **characterized in that**, it comprises the system-on-chip according to claim 12.

15. A vehicle, **characterized by** comprising the in-vehicle intelligent system according to claim 14.

## Amended claims

### Amended claims in accordance with Rule 137(2) EPC.

1. A data processing method, wherein, the data processing method is applied to a system-on-chip, which comprises a first hardware domain and a second hardware domain, **characterized in that** the first hardware domain comprises a first partition and a second partition, hardware isolation exists between the first hardware domain and the second hardware domain, and an isolation exists between the first partition and the second partition; the first partition is provided with a first trusted application library for providing a secure storage service and a second trusted application library for providing a service for the second hardware domain, so as to provide a trusted execution environment; and the second partition and the second hardware domain are incapable of providing a trusted execution environment; and
the method comprises:
sending (S10), by the second hardware domain, a first data processing request to the first partition;
calling a first driver in the first partition (S20), wherein the first driver corresponds to the first data processing request and is capable of performing data interaction and collaborative operation with the first trusted application library and the second trusted application library, respectively, during the execution of the driver, so that both the first hardware domain and the second hardware domain have security protection capabilities;
driving (S30), by the first driver, the first partition to execute a trusted application corresponding to the first data processing request, wherein the trusted application is located in the first partition; and
returning an execution result of the trusted application to the second hardware domain (S40),
wherein the first hardware domain runs a first operating system, and the second hardware domain runs a second operating system; and
in a case where the first operating system is different from the second operating system, the first driver drives the first partition to execute a trusted application corresponding to the first data processing request comprises:
sending, by the first driver, a first call request to a first target application in the second trusted application library, if the first driver needs to call a trusted application in the first trusted application library but cannot directly call the trusted application in the first trusted application library;
converting, by the first target application, the first call request into a second call request, and sending the second call request to the first trusted application library;
calling, by the first trusted application library, a second driver via a GlobalPlatform trusted execution environment internal core application programming interface, in response to the second call request; and
driving, by the second driver, the first trusted application library to execute the trusted application corresponding to the first data processing request.

2. The method according to claim 1, wherein, calling, by the first trusted application library, the second driver via the GlobalPlatform trusted execution environment internal core application programming interface comprises:
converting, by the first trusted application library, the first call request conforming to the GlobalPlatform trusted execution environment internal core application programming interface standard into the second call request conforming to the framework requirement of the second trusted application library.

3. The method according to claim 1, wherein, it further comprises:
sending, by the second partition, a second data processing request to the first partition;
calling a third driver in the first partition, wherein the third driver corresponds to the second data processing request;
driving, by the third driver, the first partition to execute a trusted application corresponding to the second data processing request, wherein the trusted application is located in the first partition; and
returning an execution result of the trusted application to the second partition.

4. The method according to claim 1, wherein, the first trusted application library comprises a first application library and a second application library, wherein the first application library is capable of data interaction with the second trusted application library.

5. The method according to claim 1, wherein, the second hardware domain comprises a user-space library, the user-space library comprising a plurality of library files, wherein at least one of the library files is capable of communicating with the first trusted application library and the second trusted application library in the first partition via a kernel driver of the second hardware domain.

6. The method according to claim 5, wherein, sending, by the second hardware domain, the first data processing request to the first partition comprises:
calling, by the second hardware domain, a target library file of the user-space library in the second hardware domain, in response to a request to process the first data, wherein the target library file corresponds to the first data;
driving, by the target library file, a front end of a trust zone of the first hardware domain via a kernel driver;
sending, by the front end of the trust zone, the first data processing request to a back end of the trust zone;
sending, by the back end of the trust zone, the first data processing request to a request processing module;
generating, by the request processing module, a secure monitor call instruction corresponding to the first data processing request; and
calling the first driver based on the secure monitor call instruction.

7. The method according to claim 6, wherein, the secure monitor call instruction comprises an operation code and parameter information corresponding to the first data processing request, and the operation code and the parameter information are used to access the trusted application corresponding to the first data processing request.

8. The method according to claim 6, wherein, calling the first driver based on the secure monitor call instruction comprises:
accessing, by the secure monitor, target system resource based on the operation code and the parameter information, wherein the target system resource matches the call of the first driver, and the target system resource is located in the first partition.

9. The method according to claim 6, wherein, generating, by the request processing module, a secure monitor call instruction corresponding to the first data processing request comprises:
parsing, by the request processing module, the first data processing request into structured data;
determining a target processing function based on the path and method corresponding to the first data processing request;
sending the structured data as input to the target processing function, and the target processing function processes the structured data;
converting the processing result of the target processing function into a response format recognizable by the secure monitor.

10. The method according to claim 1, wherein, returning the execution result of the trusted application to the second hardware domain comprises:
storing the execution result of the trusted application in a target register or a target memory location; and
calling, by the second hardware domain, the execution result stored in the target register or the target memory location.

11. A system-on-chip, wherein, it performs data processing using the method according to any one of claims 1 to 10.

12. An electronic device, wherein, it comprises the system-on-chip according to claim 11.

13. An in-vehicle intelligent system, wherein, it comprises the system-on-chip according to claim 11.

14. A vehicle, **characterized by** comprising the in-vehicle intelligent system according to claim 13.
